(19) **Europäisches Patentamt**

**European Patent Office**

**Office européen des brevets**

(11) **EP 4 632 219 A1**

(12) **EUROPEAN PATENT APPLICATION**

(43) Date of publication:
**15.10.2025 Bulletin 2025/42**

(21) Application number: **24169444.7**

(22) Date of filing: **10.04.2024**

(51) International Patent Classification (IPC):
**F03D 7/02** *(2006.01)* **F03D 7/04** *(2006.01)*

(52) Cooperative Patent Classification (CPC):
**F03D 7/0298; F03D 7/0224; F03D 7/0272; F03D 7/043;** F03D 7/0302; F05B 2270/334

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Nordex Energy SE & Co. KG**
**22419 Hamburg (DE)**

(72) Inventor: **Kusiek, Arne**
**22419 Hamburg (DE)**

(74) Representative: **Völkl Siebenson Patentanwälte - Partnerschaft mbB**
**Baaderstraße 13**
**80469 München (DE)**

(54) **METHOD FOR OPERATING A WIND TURBINE AND WIND TURBINE**

(57)     According to an embodiment, the method is for operating a wind turbine (100) having a tower (20), a rotor (10) with a rotor blade (1, 2, 3) and a generator (50) coupled to the rotor (10). The wind turbine further comprises a pitch setting system (13) for changing the pitch angle of the rotor blade and a generator controller (51) for controlling the generator torque of the generator. The method comprises a step of providing first information (I1) which is representative of at least two motion variables ($v\_t$, $a\_t$, $v\_b$, $a\_b$). The motion variables are motion variables of an oscillation of the tower and/or of an oscillation of the rotor blade. Then, an operating setpoint (OS_i) is determined for at least one of the pitch setting system and the generator controller depending on the first information. The at least one operating setpoint is determined such that, when the pitch setting system and/or the generator controller is operated according to the respective operating setpoint, it sets the pitch angle of the rotor blade or the generator torque, respectively, in order to damp the oscillation.

Fig. 7

**Description**

The present disclosure relates to a method for operating a wind turbine. Furthermore, the disclosure relates to a computer program, a computer-readable data carrier, a control system and a wind turbine.

Wind turbines are widely known and are used to convert wind energy into electrical energy. Some components of the wind turbine, like the tower or the rotor blades, tend to oscillate during operation. This causes damage to those components and reduces the lifetime of the whole wind turbine.

One object to be achieved is to provide a method which contributes to a longer lifetime of the wind turbine. Further objects to be achieved are to provide a computer program, a computer-readable data carrier, a control system and a wind turbine for executing such a method.

First, the method for operating a wind turbine is specified.

According to an embodiment, the method is for operating a wind turbine having a tower, a rotor with a rotor blade and a generator coupled to the rotor. The wind turbine further comprises a pitch setting system for changing a pitch angle of the rotor blade as well as a generator controller for controlling a generator torque of the generator. The method comprises a step of providing first information which is representative of at least two motion variables. The motion variables are motion variables of an oscillation of the tower and/or of an oscillation of the rotor blade. Then, an operating setpoint is determined for at least one of the pitch setting system and the generator controller depending on the first information. The at least one operating setpoint is determined such that, when the pitch setting system and/or the generator controller is operated according to the respective operating setpoint, the pitch setting system sets the pitch angle of the rotor blade in order to dampen the oscillation or the generator controller sets the generator torque in order to dampen the oscillation, respectively.

The present invention is, inter alia, based on the idea that the aerodynamics of the rotor blades of the wind turbine can be influenced by the pitch angle. Thus, depending on the pitch angle, forces acting on the rotor blade and, accordingly, on the tower, can be influenced. Likewise, the rotational speed of the rotor, which can be influenced by the generator torque, influences the aerodynamics of the rotor and, with this, it influences the forces acting on the rotor and the tower. It was found that when using two or more motion variables of an oscillation of the tower and/or the rotor blade as an input, a necessary pitch angle change and/or generator torque change to counteract the oscillation of the rotor blade and/or of the tower can be determined precisely enough to reliably reduce the oscillation(s).

The method specified herein is, in particular, a computer-implemented method, i.e. is performed with the help of a computer or a processor.

The generator is coupled to the rotor, e.g. via a gearbox, so that, when the rotor rotates, the generator produces electric energy.

Herein, when information is representative of a certain quantity or certain quantities, this means that the quantity or quantities can be extracted from the information, either directly, or the quantity/quantities can at least be derived from the information. In other words, the quantity/quantities is/are present in the information, or at least data are present in the information, from which the quantity/quantities can be derived or determined or calculated, respectively. Furthermore, here and in the following, information is, in particular, electronic information, such as electronic data.

The first information is representative of at least two motion variables. Motion variables are variables which determine the movement of an element, herein an oscillation. Motion variables can be, for example, a position, a velocity, an acceleration or a jerk of an element.

The at least two motion variables could be motion variables only of the oscillation of the tower or only of the oscillation of the rotor blade. Alternatively, the motion variables could comprise at least one motion variable of the oscillation of the tower and at least one motion variable of the oscillation of the rotor blade. By way of example, at least two of the motion variables are motion variables of the tower.

The first information is, for example, provided repeatedly or continuously so that the time-dependency of the motion variables is known. The first information is, for example, determined depending on measurements which are performed continuously or repeatedly.

The motion variables are indicative of an oscillation of either the tower or the rotor blade or of both. For example, the oscillation(s) is/are oscillation(s) in the z-direction, also referred to as forward-backward direction. This is the direction of the wind flow. Indeed, the aerodynamic relation between the pitch angle and a force in the z-direction, namely the thrust force, is particularly strong.

An operating setpoint is determined for at least one of the pitch setting system and the generator controller. That is, at least one operating setpoint is determined. For example, one or more operating setpoints are determined for the pitch setting system and one or more operating setpoints are determined for the generator controller. Indeed, if the rotor comprises more than one rotor blade, an operating setpoint for each rotor blade may be determined.

The at least one operating setpoint for the pitch setting system and/or for the generator is determined depending on the first information. A setpoint herein defines a certain target to be achieved when operating the wind turbine. For example, an operating setpoint for the pitch setting system defines the target operation of the pitch setting system. An operating setpoint is, in particular, equivalent to control/operation information. A control module can convert the operating setpoint into an actual electric signal, e.g. a PWM signal, with which, for example, a drive of the pitch setting system is then controlled so that the pitch angle is changed accordingly.

The operating setpoint for the pitch setting system is determined such that it causes the pitch setting system to set or change the pitch angle of the rotor blade such that the oscillation (of the tower and/or the rotor blade) is damped. Particularly, the operating setpoint for the pitch setting system is determined such that, when the pitch setting system is operated according to the operating setpoint, it sets/changes the pitch angle of the rotor blade to the sum of an actually desired pitch angle and an offset pitch angle. The actually desired pitch angle is the pitch angle determined without consideration of the damping of the oscillation. It may be determined for optimized power output. The offset pitch angle is a delta to the actually desired pitch angle which, via an aerodynamic relation, results in a force counteracting the oscillation(s).

Thus, the operating setpoint for the pitch setting system may be representative of the offset pitch angle or may be representative of an offset pitch angle speed, i.e. a determined change over time of the offset pitch angle, particularly the determined time-derivative of the offset pitch angle. For example, the operating setpoint for the pitch setting system is a pitch angle setpoint or a pitch angle speed setpoint.

The operating setpoint for the generator controller is determined such that it causes the generator controller to set/change the generator torque. The operating setpoint for the generator controller may be representative of an offset generator torque which, via an aerodynamic interaction, results in a force counteracting the oscillation(s). For example, when the generator controller is operated according to the operating setpoint, it sets/changes the generator torque of the generator such that the offset generator torque is added to an actually desired generator torque. The actually desired generator torque is the generator torque determined without consideration of the damping of the oscillation.

The operating setpoint for the generator controller could be a torque setpoint or a power setpoint. The generator controller may comprise a converter which uses e.g. pulse-width modulation to actually control the generator. The generator and the generator controller may realize a doubly fed induction generator or a synchronous generator in combination with a full-size converter.

The at least one operating setpoint may be determined continuously or repeatedly. Accordingly, the pitch setting system and/or the generator controller may change the pitch angle or the generator torque continuously or repeatedly according to the operating setpoint(s).

For example, the operating setpoint for the pitch setting system is determined such that it causes the pitch setting system to set the pitch angle of the rotor blade to the actually desired pitch angle plus an increasing or decreasing offset pitch angle which is added in order to dampen the oscillation. This increase and decrease may alternate in a periodic manner. The frequency of this periodicity may substantially equal a natural frequency of the oscillation of the tower or of the rotor blade. Likewise, the operating setpoint for the generator controller may be determined such that it causes the generator controller to set the generator torque to an actually desired generator torque plus an increasing or decreasing offset generator torque which is added in order to dampen the oscillation. This increase and decrease may alternate in a periodic manner, as described above.

According to a further embodiment, the method further comprises a step of determining second information depending on the first information. The second information is determined using at least one differential equation of motion with the at least two motion variables being variables of the at least one differential equation of motion. The at least one differential equation of motion describes, in particular, the movement of the tower and/or of the rotor blade in a direction of the oscillation, e.g. in z-direction.

The second information is representative of a necessary change over time of a force in order to dampen, i.e. reduce, the oscillation. The force acts on the system of the tower and the rotor blade. For example, the force acts directly on the rotor blade. The force is, in particular, an external force which acts on the system, such as a force resulting from the wind.

In other words, by using the at least one differential equation of motion and the at least two motion variables, second information which is representative of a change over time of a force which counteracts the oscillation is derived. For example, the change over time of the force is the time-derivative of the force. The second information may be determined continuously or repeatedly.

According to a further embodiment, the at least one operating setpoint is determined depending on the second information by using an aerodynamic relation between the force and the pitch angle and/or between the force and the rotational speed of the rotor. Indeed, as mentioned above, the pitch angle and the rotational speed of the rotor influence forces acting on the rotor blade, the rotor and, accordingly, the tower. For example, the pitch angle and the rotational speed influence the thrust force acting on the rotor in z-direction, i.e. in forward-backward direction.

According to a further embodiment, the oscillation is a forward-backward oscillation of the tower and/or of the rotor blade.

According to a further embodiment, the force of the second information is the thrust force created by the rotation of the rotor. Indeed, when the thrust force is increased and decreased in an alternating manner, which can be realized, for example, by adding an alternatingly increasing and decreasing offset pitch angle to the actually desired pitch angle and/or by alternatingly increasing and decreasing the rotational speed, an oscillation of the tower and/or the rotor blade in z-direction can be damped.

According to a further embodiment, the first information is representative of only two motion variables, for example the acceleration and velocity of the oscillation of the tower. In this case, the oscillation of the rotor blade is neglected, e.g. the rotor blade is assumed to be stiff. The operating setpoint is then determined by using each of the two motion variables. In this way, one differential equation of motion of second order or two equations of motion of first order can be used for determining the second information depending on the first information.

According to a further embodiment, the first information is representative of at least four motion variables. For example, these are at least two motion variables of the oscillation of the tower and at least two motion variables of the oscillation of the rotor blade. By way of example, the at least four motion variables comprise the acceleration of the tower, the velocity of the tower, the acceleration of the rotor blade and the velocity of the rotor blade. Herein, when talking about acceleration and velocity, the acceleration and velocity of the oscillation are meant. For example, in each case the accelerations and velocities are angular accelerations and angular velocities or translatory accelerations and translatory velocities.

According to a further embodiment, the at least one operating setpoint is determined by using each of the at least four motion variables. By having the above-mentioned four motion variables, two coupled differential equations of motion of second order or four coupled differential equations of first order may be used for determining the second information depending on the first information. Particularly, the system of the tower and the rotor blade is then treated as a 2-mass oscillator.

The following differential equations of motion may be used:

$$a_t = -t_1 \cdot v_t - t_2 \cdot z_t + t_3 \cdot v_b + t_4 \cdot z_b \qquad (1)$$

$$a_b = b_1 \cdot F + b_2 \cdot v_t + b_3 \cdot z_t - b_4 \cdot v_b - b_5 \cdot z_b \qquad (2)$$

a_t, v_t and z_t are the acceleration, velocity and position of the tower. a_b, v_b and z_b are the acceleration, velocity and position of the rotor blade. F is a force acting on the rotor blade, e.g. the above-mentioned force for damping the oscillation. t_1 to t_4 and b_1 to b_5 are parameters of a model of the tower and the rotor blade. These parameters represent, inter alia, the mass of the tower, the mass of the blade, the dimensions of the tower and the blade and the materials thereof.

According to a further embodiment, the at least one operating setpoint is determined with the help of a multi-term controller, in particular a Linear Quadratic Regulator (LQR) controller. The multi-term controller uses the first information and delivers one output which is assigned to the at least one operating setpoint.

According to a further embodiment, the multi-term controller uses a state space representation of the differential equations of motion. The state space representation of the differential equations of motion is such that the multi-term controller delivers the necessary change over time of the force, e.g. the necessary time-derivative of the force. The state space variables of the state space representation are the at least two motion variables.

The time-derivatives of the formulas (1) and (2) read as:

$$\dot{a}_t = -t_1 \cdot a_t - t_2 \cdot v_t + t_3 \cdot a_b + t_4 \cdot v_b \qquad (3)$$

$$\dot{a}_b = b_1 \cdot \dot{F} + b_2 \cdot a_t + b_3 \cdot v_t - b_4 \cdot a_b - b_5 \cdot v_b \qquad (4)$$

With these formulas, the following state space variables can be defined:

$$x = (a_t, v_t, a_b, v_b) \qquad (5)$$

The state space representation may look as follows:

$$\dot{x} = \begin{bmatrix} -t_1 & -t_2 & t_3 & t_4 \\ 1 & 0 & 0 & 0 \\ b_2 & b_3 & -b_4 & -b_5 \\ 0 & 0 & 1 & 0 \end{bmatrix} \cdot x + \begin{bmatrix} 0 \\ 0 \\ b_1 \\ 0 \end{bmatrix} \cdot u \qquad (6)$$

wherein

$$u = \dot{F} = dF/dt \tag{7}$$

Particularly, u is the output of the multi-term controller.

According to a further embodiment, a compensation function determines third information depending on the second information by using the aerodynamic relation. The third information is representative of the change over time of the pitch angle, particularly of the time-derivative of the pitch angle, and/or of the change over time of the rotational speed of the rotor, particularly the time-derivative of the rotational speed of the rotor, with which the necessary change over time of the force is obtainable. In the case of the force being the thrust force, the aerodynamic relation is as follows:

$$F = \frac{1}{2} \cdot c_t(\lambda, \beta_{is}) \cdot \rho_{air} \cdot \pi \cdot R_{Rot}^2 \cdot v_w^2 \tag{8}$$

The time-derivative thereof is

$$\frac{dF}{dt} = \frac{dF}{d\Omega_{Rot}} \cdot \frac{d\Omega_{Rot}}{dt} + \frac{dF}{d\beta} \cdot \frac{d\beta}{dt} + \frac{dF}{dv_w} \cdot \frac{dv_w}{dt} \tag{9}$$

$c_t$ is the thrust coefficient, which depends on the actual pitch angle $\beta$ and the tip-speed ratio $\lambda$. The tip-speed ratio $\lambda$ depends on the rotational speed $\Omega\_Rot$ of the rotor. $\rho\_air$ is the air density, $R\_Rot$ is the radius of the rotor and $v\_w$ is the wind speed. Thus, using formula (9), the time-derivative of the pitch angle and the time-derivative of the rotational speed can be determined from the time-derivative of the thrust force which is obtained from the multi-term controller.

The determined change over time of the pitch angle with which the necessary change over time of the force is obtainable is, in particular, the above-mentioned offset pitch angle speed. Time integration of this offset pitch angle speed leads to the above-mentioned offset pitch angle.

According to a further embodiment, the operating setpoint is determined depending on the third information. For example, the determined change over time of the pitch angle, i.e. the offset pitch angle speed (herein also abbreviated as "Δβ/Δt"), is added to the actually desired pitch angle speed (herein also abbreviated "Δβ'i/Δt"). The operating setpoint may then be determined to be representative of this sum or of the time integral of this sum.

An offset generator torque (herein also abbreviated as "ΔM_g") may be determined by multiplying the determined change over time of the rotational speed (herein also abbreviated as "ΔΩ_Rot/Δt") by the generator moment of inertia (also abbreviated as "J_L") and, if applicable, the transmission ratio (also abbreviated "i_g") of the gearbox. The operating setpoint for the generator controller may then be determined to be representative of this offset generator torque.

According to a further embodiment, the compensation function approximates the relation between the change over time of the force and the change over time of the pitch angle as:

$$\frac{\Delta\beta}{\Delta t} = \frac{1}{K_1} \cdot \left( \frac{dF}{dt} - K_2 \right) \tag{10}$$

This is done in order to determine the third information depending on the second information. $K\_2$ is thereby added to the output of the multi-term controller.

According to a further embodiment, the compensation function approximates the relation between the change over time of the force and the change over time of the rotational speed as:

$$\frac{\Delta\Omega_{Rot}}{\Delta t} = \frac{1}{K_3} \cdot \left( \frac{dF}{dt} - K_4 \right) \tag{11}$$

This is done in order to determine the third information depending on the second information. $K\_4$ is thereby added to the output of the multi-term controller.

With the above-mentioned aerodynamic relation, the following can be derived for $K\_1$ to $K\_4$:

$$K_1 = \frac{\rho_{air} \cdot \pi \cdot R_{Rot}^4 \cdot \Omega_{Rot}^2}{2 \cdot \lambda^2} \cdot \frac{\Delta c_t}{\Delta\beta} \tag{12}$$

$$K_2 = \frac{\rho_{air} \cdot \pi \cdot R_{Rot}^4 \cdot \Omega_{Rot}}{2 \cdot \lambda} \cdot \frac{\Delta c_t}{\Delta \lambda} \cdot \frac{d\Omega_{Rot}}{dt} \qquad (13)$$

$$K_3 = \frac{\rho_{air} \cdot \pi \cdot R_{Rot}^4 \cdot \Omega_{Rot}}{2 \cdot \lambda} \cdot \frac{\Delta c_t}{\Delta \lambda} \qquad (14)$$

$$K_4 = \frac{\rho_{air} \cdot \pi \cdot R_{Rot}^4 \cdot \Omega_{Rot}^2}{2 \cdot \lambda^2} \cdot \frac{\Delta c_t}{\Delta \beta} \cdot \frac{d\beta}{dt} \qquad (15)$$

The time-derivative

$$\frac{dF_S}{dv_w} \cdot \frac{dv_w}{dt} \qquad (16)$$

can be assumed to be a disturbance and can be neglected, for example.

According to a further embodiment, the change over time of the pitch angle and the change over time of the rotational speed of the third information are weighted by weighting factors in order to determine the at least one operating setpoint. The weighting factors are determined, for example, depending on at least one operation parameter of the wind turbine.

The weighting factor x for the change over time of the pitch angle and the weighting factor y for the change over time of the rotational speed are, for example, related as follows:

$$y = 1 - x \qquad (17)$$

By way of example, if the pitch angle is larger than a predetermined threshold value, x is set to 1. In this case, only the pitch angle is changed in order to dampen the oscillation. Indeed, using a change of the pitch angle to dampen the oscillation is more efficient than using a change in the rotor speed. However, in the case that the pitch angle may only be adjusted within predetermined limits, e.g. if it is not allowed to be set to negative values, the change of the rotational speed of the generator can be an adequate measure to dampen the oscillation. For example, if the actual pitch angle is below the threshold value, x is set to be smaller than 1. If the pitch angle is below a further threshold value, which is smaller than the threshold value, then x may be set to 0. Between the threshold value and the further threshold value, x may decrease continuously, e.g. linearly. By way of example, the threshold value is 0.2° and the further threshold value is 0°.

According to a further embodiment, the rotor comprises two or more rotor blades, for example three rotor blades. All features disclosed herein in connection with one rotor blade are also disclosed for the other rotor blades.

According to a further embodiment, an operating setpoint is determined for each of the rotor blades depending on the first information. For example, the operating setpoints are determined such that, when the pitch setting system is operated according to the operating setpoints, the pitch setting system sets the pitch angles of the rotor blades to the respective actually desired pitch angle plus an offset pitch angle. The offset pitch angle is thereby assigned to the first information and is added in order to dampen the oscillation(s). The offset pitch angle may be the same for all rotor blades.

In other words, for each rotor blade, the change of the pitch angle determined depending on the first information is the same, namely the offset pitch angle. Thus, the pitch angle change induced by the consideration of the first information is a collective pitch angle change. The actually desired pitch angles, however, may be different for all rotor blades. They may be determined by individual pitch control.

According to a further embodiment, the first information is determined depending on measurements. The measurements may be taken with one or more sensor systems. For example, an acceleration sensor is arranged at the top of the tower (e.g. in the nacelle) in order to determine the acceleration and velocity of the tower top. Furthermore, each rotor blade may be assigned at least one sensor for measuring the acceleration and/or the velocity and/or the position of the oscillation of the rotor blade. For example, each rotor blade is assigned at least one strain sensor, such as an optical fiber sensor or a strain gauge sensor. With these sensors, the bending moments acting on the rotor blade can be determined and, from this, the acceleration and the velocity of the oscillation of the rotor blade can be derived.

Next, the computer program, the computer-readable data carrier and the control system are specified.

According to an embodiment, the computer program comprises instructions which, when the program is executed by a control system, cause the control system to carry out the method for operating a wind turbine according to any one of the embodiments described herein.

According to an embodiment, the computer-readable data carrier has the computer program stored thereon.

According to an embodiment, the control system comprises means configured to execute the method for operating a wind turbine according to any one of the embodiments described herein. Particularly, the method is carried out when the above-mentioned computer program is executed by the control system. All features disclosed for the method are therefore also disclosed for the control system and vice versa.

The control system may comprise a control device, for example at least one processor and/or at least one programmable logic controller, PLC for short. The control system may be part of the wind turbine.

According to an embodiment, the control system comprises means, particularly sensors or sensor systems, with the help of which the first information is determinable. Particularly the acceleration and/or the velocity of an oscillation of the tower is determinable with the help of the means. Additionally or alternatively, the acceleration and/or the velocity of an oscillation of the rotor blade or the rotor blades, respectively, can be determined with the help of the means. The means may be the above-mentioned sensors.

Next, the wind turbine is specified.

According to an embodiment, the wind turbine comprises a tower and a rotor with a rotor blade as well as a generator coupled to the rotor. The wind turbine further comprises a pitch setting system for changing the pitch angle of the rotor blade and a generator controller for controlling the generator torque of the generator. Furthermore, the wind turbine comprises the control system according to any one of the embodiments described herein. The control system is connectable or connected in data communication to the pitch setting system and the generator controller in order to operate the pitch setting system and/or the generator controller according to the at least one operating setpoint. For example, via the connection, the control system can provide the pitch setting system with the operating setpoint(s) for the rotor blade(s) or it can provide the generator controller with an operating setpoint.

Thus, the wind turbine is configured to execute the method according to any of the embodiments described herein. Therefore, all features disclosed for the method are also disclosed for the wind turbine and vice versa. When the method is executed, the pitch setting system and/or the generator controller is operated according to the operating setpoint(s) and changes/sets the pitch angle(s) and/or the generator torque accordingly.

Hereinafter, the method for operating a wind turbine, the control system and the wind turbine will be explained in more detail with reference to the drawings on the basis of exemplary embodiments. The accompanying figures are included to provide a further understanding. In the figures, elements of the same structure and/or functionality may be referenced by the same reference signs. It is to be understood that the embodiments shown in the figures are illustrative representations and are not necessarily drawn to scale. Insofar as elements or components correspond to one another in terms of their function in different figures, the description thereof is not repeated for each of the following figures. For the sake of clarity, elements might not appear with corresponding reference symbols in all figures.

Figure 1 shows an exemplary embodiment of a wind turbine,

Figures 2 and 3 show the behavior of an exemplary embodiment of the wind turbine during operation,

Figure 4 shows a diagram of an operation of a wind turbine,

Figures 5 and 6 show flowcharts of different exemplary embodiments of the method for operating a wind turbine,

Figure 7 shows a diagram of an exemplary embodiment of the method for operating the wind turbine and an exemplary embodiment of the control system,

Figure 8 shows an exemplary embodiment of a module of an exemplary embodiment of the control system,

Figures 9 and 10 show simulation results,

Figure 11 shows another exemplary embodiment of a module of an exemplary embodiment of the control system,

Figure 12 shows an exemplary embodiment of how to determine weighting factors.

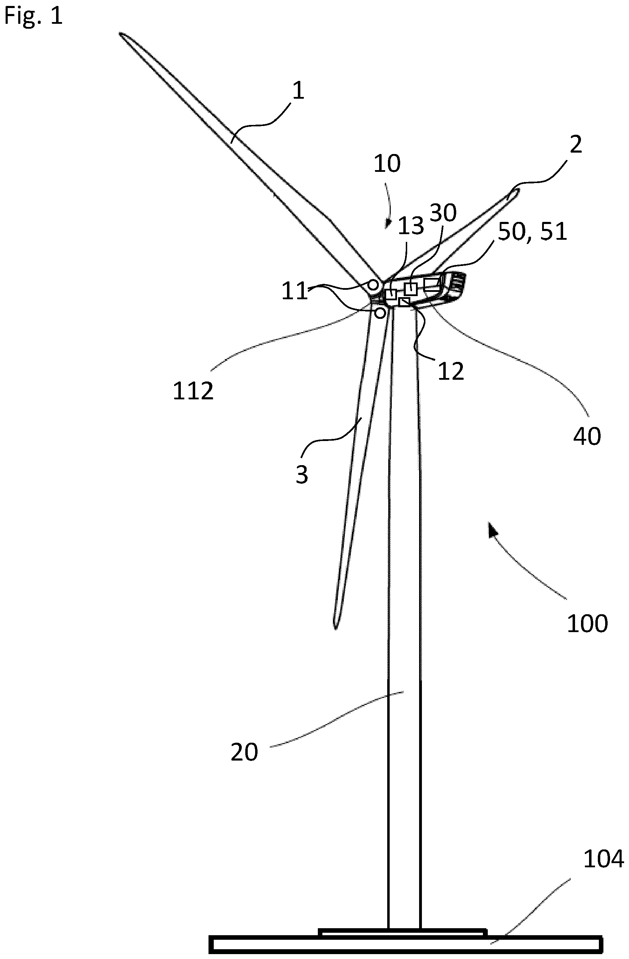

Figure 1 shows a schematic view of an exemplary embodiment of a wind turbine 100 which comprises a tower 20. The tower 20 is fixed to the ground by means of a foundation 104. At one end of the tower 20, opposite to the ground, a nacelle 40 is rotatably mounted. The nacelle 40 comprises a generator 50 which is coupled to a rotor 10, either directly or via a gearbox. The rotor 10 comprises three (wind turbine) rotor blades 1, 2, 3, which are arranged on a rotor hub 112. The rotor hub 112 may be connected to a rotor shaft.

During operation, the rotor 10 is set in rotation by an air flow, for example wind. This rotational movement is transmitted to the generator 50. The generator 50 converts the mechanical energy of the rotor 10 into electrical energy.

In order to control the rotational speed and the power output, the wind turbine 100 comprises a pitch setting system 13 which is configured to set the pitch angles of the rotor blades 1, 2, 3. The pitch setting system 13 may be configured to set the pitch angle of each rotor blade 1, 2, 3 individually. For example, the pitch setting system 13 comprises at least one drive for each rotor blade 1, 2, 3 via which a pitch angle setpoint signal is translated into a mechanical movement of the respective rotor blade 1, 2, 3 about its longitudinal axis. The drives may be electric motors or hydraulic drives. Moreover, the rotational speed of the rotor 10 can also be controlled by a generator controller 51 of the wind turbine 100 which sets the generator torque of the generator 50.

The wind turbine 100 further comprises a control system configured to operate the wind turbine 100. The control system comprises a control device 30, such as a PLC or a processor, a first sensor system 11 and a second sensor system 12. The control device 30 of this exemplary wind turbine is located in the nacelle 40. However, the control device 30 may also be located elsewhere, e.g. in a control cabinet.

The first sensor system 11 comprises, for example, three or four strain sensors for each rotor blade 1, 2, 3, wherein the strain sensors are coupled to the respective rotor blade 1, 2, 3. The strain sensors may be fiber optic strain sensors, for example. The measurement signals from the strain sensors may be used to estimate/determine the bending moment acting on the respective rotor blade 1, 2, 3. With this, the acceleration and velocity of an oscillation of each rotor blade 1, 2, 3, for example in z-direction or forward-backward direction, respectively, can be determined.

The second sensor system 12 comprises, for example, an acceleration and/or velocity sensor for measuring the acceleration and/or velocity of an oscillation of the top of tower 20, for example in z-direction.

The control device 30 is connected in data communication to the sensor systems 11, 12, the pitch setting system 13 and the generator controller 51, so that it is able to communicate with the systems 11, 12, 13 and the generator controller 51. The measurements from the sensor systems 11, 12 are processed by the control device 30 and, depending on this, operating setpoints for the pitch setting system 13 and the generator controller 51 are determined. The pitch setting system 13 may then be provided with and operated according to the operating setpoints in order to properly set/change the pitch angles of the rotor blades 1, 2, 3. The generator controller 51 may also be provided with and operated according to an operating setpoint in order to properly set/change the generator torque.

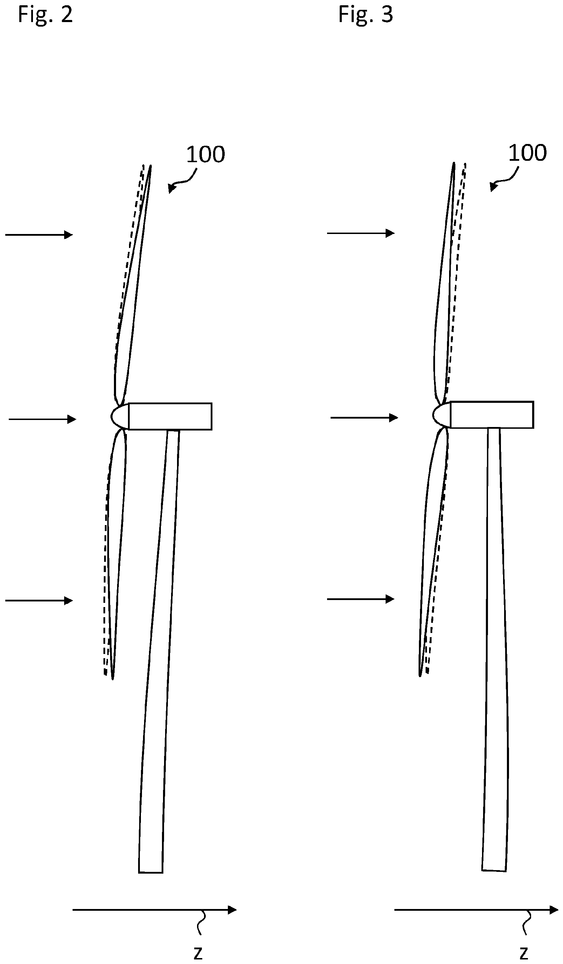

Figures 2 and 3 shows the wind turbine 100 from a side view during operation of the wind turbine 100. Wind acting on the rotor 10 of the wind turbine 100 is indicated by the arrows. The wind flow is substantially in z-direction. Due to the forces acting on the rotor blades 1, 2, 3 and the tower 20, the rotor blades 1, 2, 3 and the tower 20 start to oscillate, for example in forward-backward direction as indicated in figure 2 (backward bending) and figure 3 (forward bending). This oscillation can harm the rotor blades 1, 2, 3 and the tower 20.

The methods for operating a wind turbine as described in the following contribute to a reduction of these oscillations.

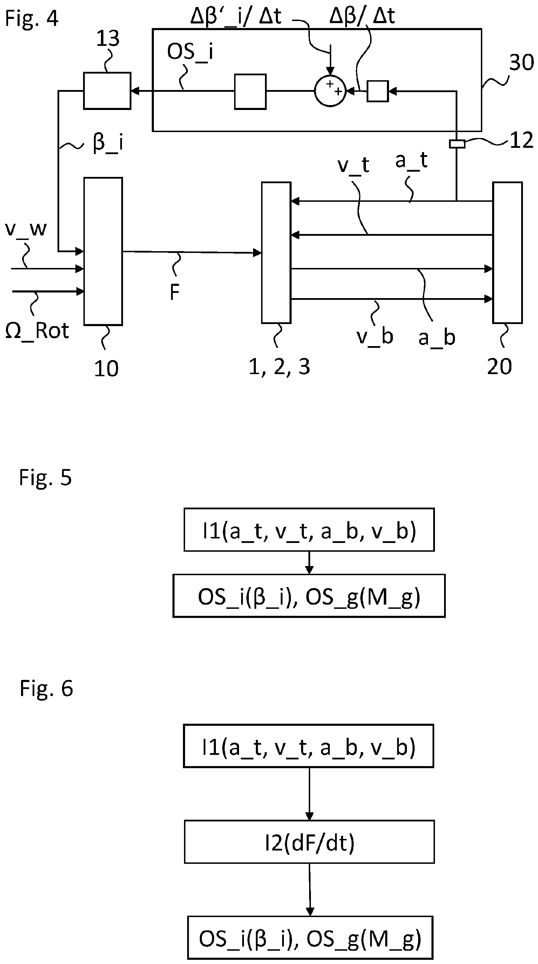

Figure 4 shows an operation of a wind turbine. The tower 20 and the rotor blades 1, 2, 3 are a coupled system when considering the oscillation in forward-backward direction, i.e. in z-direction. The velocity $v\_t$ and the acceleration $a\_t$ of the oscillation of the tower 20 in z-direction depend on the acceleration $a\_b$ and the velocity $v\_b$ of the oscillation of the rotor blades 1, 2, 3 in z-direction and vice versa. This is indicated by the arrows between the rotor blades 1, 2, 3 and the tower 20.

A possible way to operate the wind turbine is to measure the acceleration $a\_t$ of the tower 20, for example with the help of the sensor system 12. These measurements are transmitted to the control device 30 which determines an offset pitch angle speed $\Delta\beta/\Delta t$ from the tower acceleration $a\_t$, for example by multiplying the tower acceleration $a\_t$ by a factor. This offset pitch angle speed $\Delta\beta/\Delta t$ is then added to the actually desired pitch angle speeds $\Delta\beta'\_1/\Delta 1$, $\Delta\beta'\_2/\Delta t$, $\Delta\beta'\_3/\Delta t$, $\Delta\beta'\_1/\Delta 1$ for short, for the rotor blades 1, 2, 3. The actually desired pitch angle speeds $\Delta\beta'\_1/\Delta 1$ may be determined for optimal power output, for example. They may be determined by individual pitch control. Particularly, criteria other than damping of the oscillation are used for determining the actually desired pitch angle speeds $\Delta\beta'\_1/\Delta 1$.

The control device 30 determines operating setpoints OS_1, OS_2, OS_3, OS_i for short, for the different rotor blades 1, 2, 3 depending on the actually desired pitch angle speed $\Delta\beta'\_1/\Delta 1$ and the offset pitch angle speed $\Delta\beta/\Delta t$. When the pitch setting system 13 is operated according to the operating setpoints OS_i, it changes/sets the pitch angles $\beta\_1$, $\beta\_2$, $\beta\_3$, $\beta\_1$ for short, of the individual rotor blades 1, 2, 3 such that they move with the desired pitch angle speeds $\Delta\beta'\_i$ plus the offset pitch angle speed $\Delta\beta/\Delta t$.

When the pitch angles $\beta\_1$ of the rotor blades 1, 2, 3 are changed, this has an influence on the aerodynamics of the rotor 10. The aerodynamics are further influenced by the rotational speed $\Omega\_Rot$ of the rotation of the rotor 10 and the wind speed $v\_w$ acting on the rotor 10. Due to the rotation of the rotor 10, a thrust force F acts on the rotor 10 which can either counteract the oscillation of the tower 20 and/or of the rotor blades 1, 2, 3 or it can amplify the oscillation of the rotor blades 1, 2, 3 and/or of the tower 20. If the offset pitch angle speed $\Delta\beta/\Delta t$ is chosen properly, the thrust force F counteracts the oscillation of the tower 20 and the rotor blades 1, 2, 3 and, therefore, dampens the oscillations.

Figure 5 shows a flowchart of an exemplary embodiment of the method for operating a wind turbine, which can even improve the damping of the oscillation compared to the method of figure 4. First information I1 is provided, which is representative of at least two motion variables of an oscillation of the tower 20 and/or of an oscillation of the rotor blades 1, 2, 3. For example, the first information I1 is representative of the acceleration a_t and the velocity v_t of the oscillation of the tower 20 in z-direction and further of the acceleration a_b and the velocity v_b of the oscillation of the blades 1, 2, 3 in z-direction. The operating setpoints OS_i for the rotor blades 1, 2, 3 are then determined depending on the first information I1 such that, when the pitch setting system 13 is operated according to the operating setpoints OS_i, the pitch angles β_1 of the rotor blades 1, 2, 3 are set in order to dampen the oscillation. Moreover, an operating setpoint OS_g for the generator controller is determined depending on the first information I1 such that, when the generator controller is operated according to the operating setpoint OS_g, the generator controller sets the generator torque M_g in order to dampen the oscillation. Thus, in contrast to what is shown in figure 4, at least two motion variables instead of only one motion variable are used to determine the operating setpoints OS_i for the rotor blades. Moreover, an operating setpoint OS_g for the generator controller is determined by using the at least two motion variables. This has been found to significantly improve the damping of the oscillation.

Figure 6 shows a further exemplary embodiment of the method for operating a wind turbine. Again, first information I1 is provided which is identical to that of figure 5. Second information I2 is then determined depending on the first information I1, wherein the second information I2 is representative of a necessary change over time dF/dt of a force F in order to dampen the oscillation. This may be, in particular, the necessary change over time dF/dt of the thrust force F described in connection with figure 4. The operating setpoints OS_i, OS_g are then determined depending on the second information I2, for example by using an aerodynamic relation between the force F and the pitch angles β_i and the rotational speed Ω_Rot of the rotor 10.

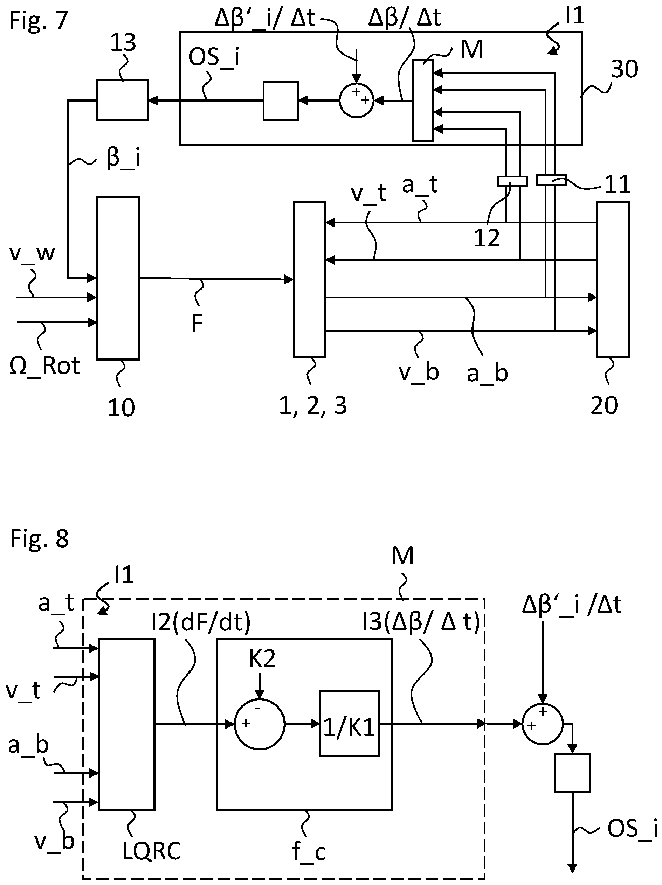

Figure 7 shows a diagram of an exemplary embodiment of the method for operating a wind turbine and of the control system. The acceleration a_t and the velocity v_t of the oscillation of the tower 20 in z-direction as well as the acceleration a_b and the velocity v_b of the oscillation of the rotor blades 1, 2, 3 in z-direction are determined with the help of the previously described sensor systems 11, 12. These measurements are provided to the control device 30. The first information I1 which is representative of these motion variables is then provided to a module M, which determines an offset pitch angle speed Δβ/Δt of the pitch angle β for the rotor blades 1, 2, 3 depending on the first information I1. Operating setpoints OS_i are then determined depending on the Δβ/Δt, e.g. by integration. When the pitch setting system 13 is operated according to the operating setpoints OS_i, the pitch angle β_1 of each rotor blade 1, 2, 3 is changed depending on the determined Δβ/Δt which is, for example, the same for all rotor blades 1, 2, 3. The offset pitch angle speed Δβ/Δt of the pitch angle β is determined such that it influences the aerodynamics of the rotor 10 in a way that the resulting thrust force F counteracts the oscillations of the tower 20 and the rotor blades 1, 2, 3 in z-direction. In this exemplary embodiment, the generator 50 / generator torque is not used for damping the oscillation.

Figure 8 shows how the module M of figure 7 could be realized. The module M comprises a multi-term controller LQRC, which is, for example, a linear quadratic regulating controller. This multi-term controller LQRC uses a state space representation of differential equations of motion of the tower 20 and the rotor blades 1, 2, 3 (see, for example, formula (6)) such that the output of the multi-term controller LQRC is the second information I2 which is representative of the necessary change over time dF/dt of the thrust force F.

The second information I2 is provided to a compensation function f_c which uses the aerodynamic relation (see, for example, formula (8)) between the thrust force F and the pitch angle β in order to determine third information I3. Here, formula (10) derived from formula (8) is used so that the third information I3 is or is representative of the change over time Δβ/Δt of the pitch angle β. Thereby, the contribution K_2 of formula (10) is subtracted from dF/dt as provided by the multi-term controller LQRC. The result is then multiplied by 1/K_1. The operating setpoints OS_i are then determined depending on the third information I3..

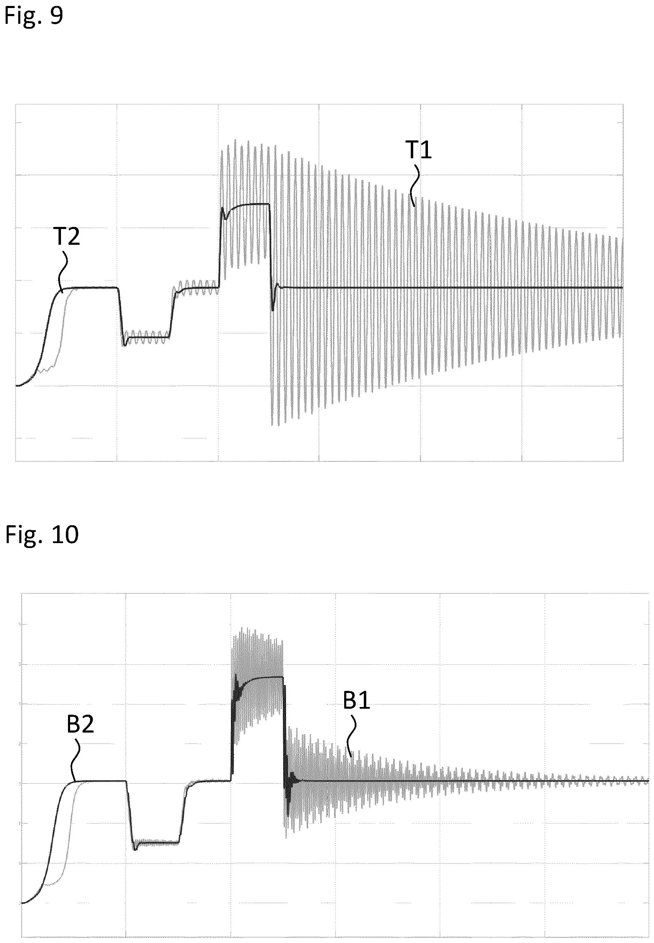

Figures 9 and 10 show simulation results. The curve T1 of figure 9 shows the position of the tower 20 as a function of time when no measures for damping the oscillation in z-direction are applied. The tower 20 is subject to significant oscillations in forward-backward direction. The curve T2 shows the result when the method for operating a wind turbine according to the method of any one of figures 5 to 8 is used. The oscillation can be suppressed almost completely.

The curve B1 of figure 10 shows the result for the rotor blades 1, 2, 3 when no measures for damping the oscillations are applied. A strong oscillation can also be observed here.

This oscillation can be almost completely suppressed when using one of the above-described methods (curve B2).

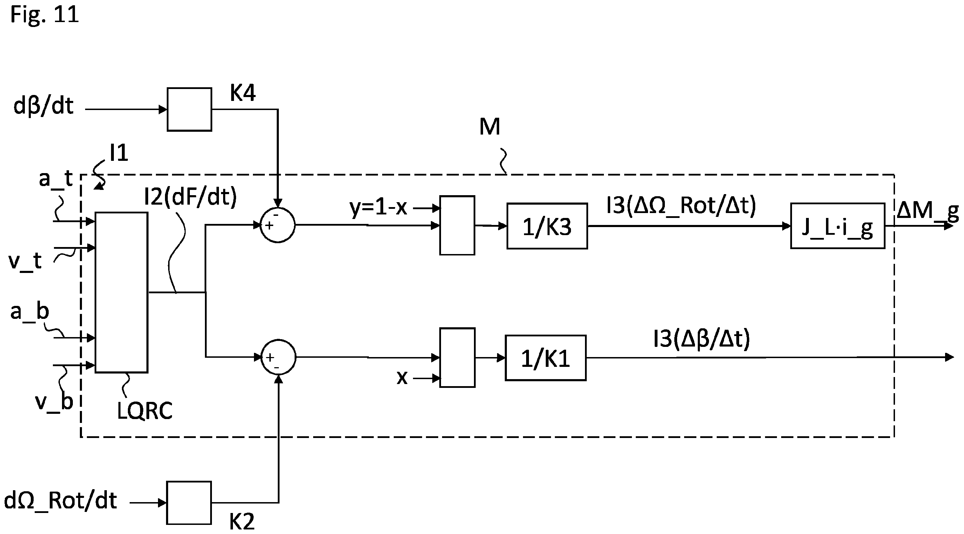

Figure 11 shows an exemplary embodiment of a module M for determining the operating setpoints OS_i, OS_g when both the pitch angles β_1 and the generator torque M_g shall be set in order to dampen the oscillations. Again, the module M comprises a multi-term controller LQRC which uses a state space representation of differential equations of motion of the tower 20 and the rotor blades 1, 2, 3 (see, for example, formula (6)) such that the output of the multi-term controller LQRC is the second information I2 which is representative of the necessary change over time dF/dt of the thrust force F.

The second information I2 is provided to a compensation function which uses the aerodynamic relation (see, for example, formula (8)) between the thrust force F and the pitch angle $\beta$ as well as the rotational speed $\Omega\_Rot$ of the rotor 10 in order to determine third information I3. Here, formula (10) derived from formula (8) and formula (11) derived from formula (8) are used so that the third information I3 is or is representative of the change over time $\Delta\beta/\Delta t$ of the pitch angle $\beta$ and of the change over time $\Delta\Omega\_Rot/\Delta t$ of the rotational speed $\Omega\_Rot$.

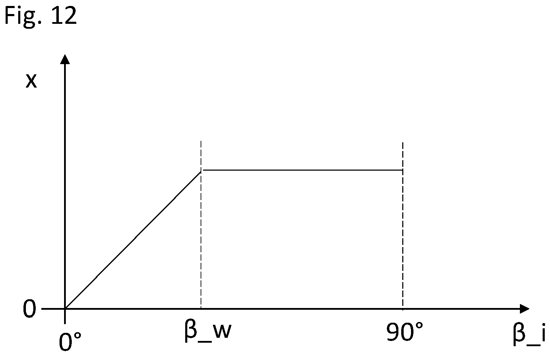

The contributions of the change over time $\Delta\beta/\Delta t$ of the pitch angle $\beta$ and the change over time $\Delta\Omega\_Rot/\Delta t$ of the rotational speed $\Omega\_Rot$ are weighted by weighting factors x and y = 1-x which are determined depending on operation parameters, for example the actual pitch angles $\beta\_1$ of the rotor blades. This is illustrated in figure 12. For a very small actual pitch angle $\beta\_1$ below a threshold value $\beta\_w$ of, for example, 0.2°, the weighting factor x increases linearly from 0 to 1. Above the threshold value $\beta\_w$, x=1, i.e. only the pitch angles $\beta\_i$ are set for damping the oscillation. The module M can be disabled (no oscillation damping) by setting x=y=0.

The operating setpoints are determined depending on the third information I3, namely depending on the weighted quantities $\Delta\beta/\Delta t$ and $\Delta\Omega\_Rot/\Delta t$. The change over time $\Delta\Omega\_Rot/\Delta t$ of the rotational speed $\Delta\Omega\_Rot$ is multiplied by the generator moment of inertia $J\_L$ and, if applicable, the transmission ratio $i\_g$ of the gearbox so that an offset generator torque $\Delta M\_g$ is obtained. The operating setpoints are then provided to the pitch setting system and the generator controller.

The invention described herein is not limited by the description in conjunction with the exemplary embodiments. Rather, the invention comprises any new feature as well as any combination of features, particularly including any combination of features in the patent claims, even if said feature or said combination per se is not explicitly stated in the patent claims or exemplary embodiments.

Reference sign list:

| | |
|---|---|
| 1 | first rotor blade |
| 2 | second rotor blade |
| 3 | third rotor blade |
| 10 | rotor |
| 11 | first sensor system |
| 12 | second sensor system |
| 13 | pitch setting system |
| 20 | tower |
| 30 | control device |
| 40 | nacelle |
| 50 | generator |
| 51 | generator controller |
| 100 | wind turbine |
| 104 | foundation |
| 112 | rotor hub |

| | |
|---|---|
| I1 | first information |
| I2 | second information |
| I3 | third information |
| OS_i | operating setpoint |
| OS_g | operating setpoint |

| | |
|---|---|
| a_t | acceleration of the tower |
| v_t | velocity of the tower |
| a_b | acceleration of a rotor blade |
| v_b | velocity of a rotor blade |
| $\beta'\_i$ | actually desired pitch angle |
| $\Delta\beta'\_1/\Delta 1$ | actually desired pitch angle speed |
| $\beta, \beta\_i$ | pitch angle |
| $d\beta/dt$ | change over time / time derivative of the pitch angle |
| M_g | generator torque |
| K_1 | parameter |
| K_2 | parameter |
| K_3 | parameter |

| K_4 | parameter |
| --- | --- |
| x | weighting factor |
| y | weighting factor |

| Δβ | offset pitch angle |
| --- | --- |
| Δβ/Δt | approximation of change over time of the pitch angle |
| ΔM_g | offset generator torque |
| J_L | generator moment of inertia |
| i_g | transmission ratio of the gearbox |

| F | force |
| --- | --- |
| dF/dt | change over time / time-derivative of the force |
| v_w | wind speed |
| Q_Rot | rotational speed of the rotor |
| dΩ_Rot/dt | change over time / time-derivative of rotational speed |
| ΔΩ_Rot/Δt | approximation of change over time of rotational speed |

| M | module |
| --- | --- |
| LQCR | multi term controller |
| f_c | compensation function |
| T1, T2 | curves |
| B1, B2 | curves |
| z | z-direction / forward-backward direction |
| β_w | threshold value |

**Claims**

1. Method for operating a wind turbine (100) having a tower (20), a rotor (10) with a rotor blade (1, 2, 3), a generator (50) coupled to the rotor (10), a pitch setting system (13) for changing a pitch angle (β_i) of the rotor blade (1, 2, 3) and a generator controller (51) for controlling a generator torque (M_g) of the generator (50), the method comprising

   - providing first information (I1) which is representative of at least two motion variables (v_t, a_t, v_b, a_b) of an oscillation of the tower (20) and/or of an oscillation of the rotor blade (1, 2, 3);
   - determining an operating setpoint (OS_i, OS_g) for at least one of the pitch setting system (13) and the generator controller (51) depending on the first information (I1) such that,

      - when the pitch setting system (13) and/or the generator controller (51) is operated according to the respective operating setpoint (OS_i, OS_g), it sets the pitch angle (β_i) of the rotor blade (1, 2, 3) or the generator torque (M_g), respectively, in order to dampen the oscillation.

2. Method according to claim 1, wherein the method further comprises

   - determining second information (I2) depending on the first information (I1) by using at least one differential equation of motion with the at least two motion variables (v_t, a_t, v_b, a_b) being variables of the at least one differential equation of motion, wherein the second information (I2) is representative of a necessary change over time (dF/dt) of a force (F) acting on the system of the tower (10) and the at least one rotor blade (1, 2, 3) in order to dampen the oscillation; wherein
   - the at least one operating setpoint (OS_i, OS_g) is determined depending on the second information (I2) by using an aerodynamic relation between the force (F) and the pitch angle (β) and/or between the force (F) and a rotational speed (Ω_Rot) of the rotor (10).

3. Method according to claim 2, wherein

   - the oscillation is a forward-backward oscillation of the tower (20) and/or of the rotor blade (1, 2, 3),
   - the force (F) is the thrust force created by the rotation of the rotor (10).

4. Method according to any one of the preceding claims, wherein

- the first information (I1) is representative of at least four motion variables (v_t, a_t, v_b, a_b), namely the acceleration (a_t) of the tower (20), the velocity (v_t) of the tower (20), the acceleration (a_b) of the rotor blade (1, 2, 3) and the velocity (v_b) of the rotor blade (1, 2, 3),
- the at least one operating setpoint (OS_i, OS_g) is determined by using each of the at least four motion variables (v_t, a_t, v_b, a_b).

5. Method according to any one of the preceding claims, wherein

- the at least one operating setpoint (OS_i, OS_g) is determined with the help of a multi-term controller (LQRC) which uses the first information (I1) and which has one output assigned to the at least one operating setpoint (OS_i, OS_g) .

6. Method according to claim 2 or any one of claims 3 to 5 in its dependency on claim 2 in combination with claim 5, wherein

- the multi-term controller (LQRC) uses a state space representation of the differential equations of motion such that the necessary change over time (dF/dt) of the force (F) is obtained,
- a compensation function (f_c) determines third information (I3) depending on the second information (I2) by using the aerodynamic relation, wherein the third information (I3) is representative of a change over time (dβ/dt) of the pitch angle (β) and/or a change over time (dΩ_Rot/dt) of the rotational speed (Ω_Rot) of the rotor (10) with which the necessary change over time (dF/dt) of the force (F) is obtainable,
- the at least one operating setpoint (OS_i, OS_g) is determined depending on the third information (I3).

7. Method according to claim 6, wherein

- the compensation function (f_c) approximates the relation between the change over time (dF/dt) of the force (F) and the change over time (dβ/dt) of the pitch angle (β) to

$$\frac{\Delta\beta}{\Delta t} = \frac{1}{K_1} \cdot \left(\frac{dF}{dt} - K_2\right)$$

in order to determine the third information (I3) depending on the second information (I2), wherein K_2 is added to the output of the multi-term controller (LQR).

8. Method according to claim 6 or 7, wherein

- the compensation function (f_c) approximates the relation between the change over time (dF/dt) of the force (F) and the change over time (dΩ_Rot/dt) of the rotational speed (Ω_Rot) to

$$\frac{\Delta\Omega_{Rot}}{\Delta t} = \frac{1}{K_3} \cdot \left(\frac{dF}{dt} - K_4\right)$$

in order to determine the third information (I3) depending on the second information (I2), wherein K_4 is added to the output of the multi-term controller (LQR).

9. Method according to any one of claims 6 to 8, wherein

- the change over time (dβ/dt) of the pitch angle (β) and the change over time (dΩ_Rot/dt) of the rotational speed (Ω_Rot) of the third information (I3) are weighted by weighting factors (x, y) in order to determine the at least one operating setpoint (OS_i, OS_g),
- the weighting factors (x, y) are determined depending on at least one operation parameter of the wind turbine (100).

10. Method according to any one of the preceding claims, wherein

- the rotor (10) comprises two or more rotor blades (1, 2, 3),

- an operating setpoint (OS_i) for each rotor blade (1, 2, 3) is determined depending on the first information (I1).

11. Computer program comprising instructions which, when the program is executed by a control system, cause the control system to carry out the method of any one of claims 1 to 10.

12. Computer-readable data carrier having the computer program of claim 11 stored thereon.

13. Control system comprising means (30) for executing the method according to any one of claims 1 to 10.

14. Control system according to claim 13, wherein the control system comprises means (11, 12) with the help of which

- the acceleration (a_t) and/or the velocity (v_t) of an oscillation of the tower (20), and/or
- the acceleration (a_b) and/or the velocity (v_b) of an oscillation of the rotor blade (1, 2, 3) is determinable.

15. Wind turbine (100) comprising

- a tower (20),
- a rotor (10) with a rotor blade (1, 2, 3),
- a generator (50) coupled to the rotor (10),
- a pitch setting system (13) for changing a pitch angle ($\beta$_i) of the rotor blade (1, 2, 3),
- a generator controller (51) for controlling a generator torque (M_g) of the generator (50),
- the control system according to claim 13 or 14, wherein
- the control system is connected or connectable in data communication to the pitch setting system (13) and the generator controller (51) in order to operate the pitch setting system (13) and/or the generator controller (51) according to the at least one operating setpoint (OS_i, OS_g) .

Fig. 1

Fig. 2

Fig. 3

100

100

Z

Z

Fig. 4

Fig. 5

$$I1(a\_t, v\_t, a\_b, v\_b)$$

$$OS\_i(β\_i), OS\_g(M\_g)$$

Fig. 6

$$I1(a\_t, v\_t, a\_b, v\_b)$$

$$I2(dF/dt)$$

$$OS\_i(β\_i), OS\_g(M\_g)$$

Fig. 7

$\Delta\beta'\_i/\Delta t$      $\Delta\beta/\Delta t$     l1

13

OS_i         M       30

$\beta\_i$

$v\_t$   $a\_t$    11

12

v_w

F

Ω_Rot          v_b   a_b

10        1, 2, 3        20

Fig. 8

                         M

l1

a_t      l2(dF/dt)       l3($\Delta\beta/\Delta t$)      $\Delta\beta'\_i/\Delta t$

K2

v_t

1/K1

a_b

OS_i

v_b     LQRC        f_c

Fig. 9

Fig. 10

Fig. 11

Fig. 12

Europäisches
Patentamt

European
Patent Office

Office européen
des brevets

# EUROPEAN SEARCH REPORT

**Application Number**

EP 24 16 9444

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SMILDEN EMIL ET AL: "Wave disturbance rejection for monopile offshore wind turbines", WIND ENERGY, vol. 22, no. 1, 14 January 2019 (2019-01-14), pages 89-108, XP093101288, GB ISSN: 1095-4244, DOI: 10.1002/we.2273 Retrieved from the Internet: URL:https://api.wiley.com/onlinelibrary/td m/v1/articles/10.1002%2Fwe.2273> * the whole document * | 1-15 | INV. F03D7/02 F03D7/04 |
| X | WO 2010/139613 A2 (VESTAS WIND SYS AS [DK]; BENGTSON JOHN [DK]) 9 December 2010 (2010-12-09) * the whole document * | 1-15 | |
| X | US 2020/011296 A1 (CAPONETTI FABIO [DK] ET AL) 9 January 2020 (2020-01-09) * paragraphs [0033] - [0049]; figures 2, 3 * | 1-3,5-15 | |
| X | WO 2007/010322 A1 (CLIPPER WINDPOWER TECHNOLOGY [US]; WILSON KITCHENER CLARK [US]) 25 January 2007 (2007-01-25) * the whole document * | 1-15 | |

**TECHNICAL FIELDS SEARCHED (IPC)**

F03D

The present search report has been drawn up for all claims

| Place of search | Date of completion of the search | Examiner |
|---|---|---|
| The Hague | 23 September 2024 | Libeaut, Laurent |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

## ANNEX TO THE EUROPEAN SEARCH REPORT
## ON EUROPEAN PATENT APPLICATION NO.

EP 24 16 9444

This annex lists the patent family members relating to the patent documents cited in the above-mentioned European search report.
The members are as contained in the European Patent Office EDP file on
The European Patent Office is in no way liable for these particulars which are merely given for the purpose of information.

23-09-2024

| Patent document cited in search report | Publication date | Patent family member(s) | Publication date |
|---|---|---|---|
| WO 2010139613 A2 | 09-12-2010 | EP 2438300 A2 | 11-04-2012 |
| | | WO 2010139613 A2 | 09-12-2010 |
| US 2020011296 A1 | 09-01-2020 | CN 110494648 A | 22-11-2019 |
| | | EP 3580452 A1 | 18-12-2019 |
| | | ES 2951472 T3 | 23-10-2023 |
| | | US 2020011296 A1 | 09-01-2020 |
| | | WO 2018145710 A1 | 16-08-2018 |
| WO 2007010322 A1 | 25-01-2007 | AT E458911 T1 | 15-03-2010 |
| | | BR PI0520373 A2 | 05-05-2009 |
| | | CA 2612072 A1 | 25-01-2007 |
| | | CN 101223358 A | 16-07-2008 |
| | | DK 1907695 T3 | 14-06-2010 |
| | | EP 1907695 A1 | 09-04-2008 |
| | | ES 2341469 T3 | 21-06-2010 |
| | | JP 2009501871 A | 22-01-2009 |
| | | PL 1907695 T3 | 30-11-2010 |
| | | PT 1907695 E | 25-05-2010 |
| | | WO 2007010322 A1 | 25-01-2007 |

EPO FORM P0459

For more details about this annex : see Official Journal of the European Patent Office, No. 12/82